# EUROPÄISCHE PATENTSCHRIFT

(11) **EP 0 363 815 B1**
(45) Veröffentlichungstag und Bekanntmachung des Hinweises auf die Patenterteilung: **26.05.1993**
(21) Anmeldenummer: 89118461.6
(22) Anmeldetag: 05.10.1989
(51) Int. Cl.: H02K 5/10, H02K 5/20

(54) **Elektromotor**
Electric motor
Moteur électrique

(30) Priorität: 11.10.1988 DE 3834506
(43) Veröffentlichungstag der Anmeldung: 18.04.1990
(73) Patentinhaber: Schorch GmbH, D-41238 Mönchengladbach (DE)
(72) Erfinder: Rausch, Hartmuth, Dr. Ing., D-4052 Korschenbroich 2 (DE)
(74) Vertreter: Cohausz & Florack Patentanwälte

(56) Entgegenhaltungen:
- FR-A- 1 167 706
- FR-A- 1 421 067
- PATENT ABSTRACTS OF JAPAN Band 4 nr. 40 ( E-4)(522), 28 März 1980; & JP-A-55013646.

## Beschreibung

Die Erfindung betrifft einen zwangsgekühlten Elektromotor mit einem Stator, einem Rotor und Lagerschilden sowie einem Lüfter für Schutzarten IP 23 und höher.

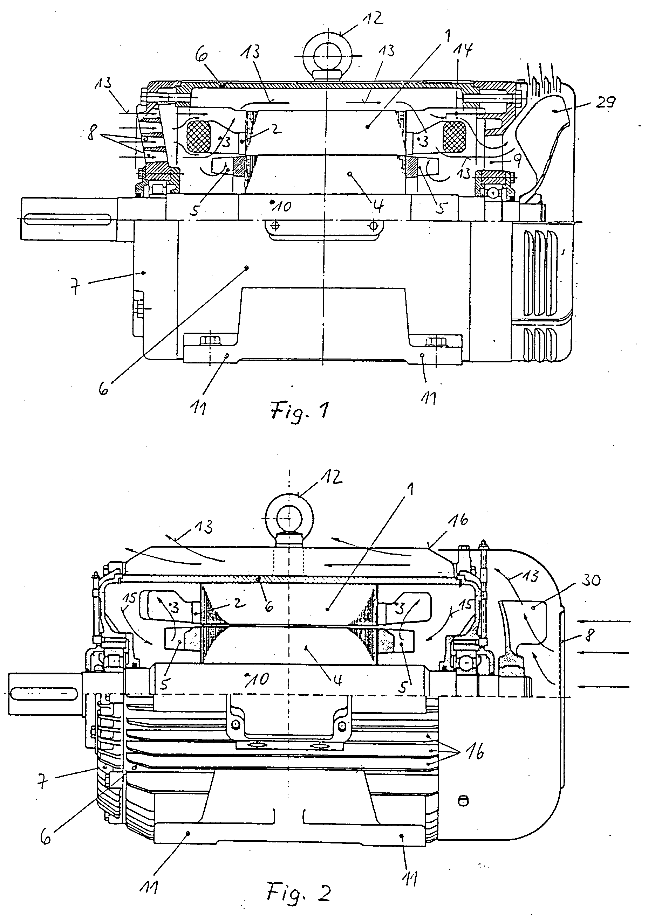

Elektrische Normmotoren in den einzelnen Schutzarten, z.B. IP 23 oder IP 54 (DIN 40050) sind baulich sehr unterschiedlich ausgeführt. Das bedeutet, daß für jede Motorbauart eigens für sie bestimmte Bauteile erzeugt und bevorratet werden müssen. Der Hintergrund dieser unterschiedlichen Bauausführung ist, daß je nach Schutzart abweichende Führung der Kühlluft zu beachten sind. Bei den höheren Schutzarten sind spannungsführende Maschinenteile gegenüber Fremdkörper oder Wassereinbruch zu schützen, so daß nicht mehr genügend Kühlluft an die Wickelköpfe der Spulen im Stator herankommt. Man wählt für diese höheren Schutzarten daher häufig die Ausführung mit Kühlrippen am Außenumfang. Durch einen an eine Stirnseite des Motors angebauten Lüfter wird Kühlluft in axialer Richtung durch die zwischen den Rippen gebildeten oben offenen Kanäle geführt, wobei allerdings das Kühlergebnis am Anfang und Ende des Motors sehr unterschiedlich ist. Durch die oben offenen Kühlkanäle streicht die Kühlluft nur auf einem Teil der Länge über den Gehäusemantel und kühlt diesen, während zunehmend in axialer Gehäuserichtung die Kühlluft nach oben aus den Kanälen entweicht und das Ende des Motorgehäuses nicht mehr ausreichend gekühlt wird. Bei den niederen Schutzarten saugt oder drückt der an eine Stirnseite des Motors angesetzte Lüfter durch Öffnungen in dem Lagerschild, das an dem dem Lüfter abgewandtem Axialende des Motors angeordnet ist, Umgebungsluft und fördert diese in axialer Richtung durch die freien Räume in dem Motor. Beispiele für die unterschiedliche bauliche Gestaltung von herkömmlichen Normmotoren zeigen die Figuren 1 und 2. Figur 1 zeigt dabei einen Elektromotor mit niedriger Schutzart, z. B. IP 23, und Figur 2 einen Normmotor höherer Schutzart, z. B. IP 54. Wie ohne weiteres erkennbar ist, sind die Gehäuseausführungen beider Normmotor-Typen sehr unterschiedlich. Einen typischen Motor der Schutzart IP 54 oder höher mit integraler Abdeckung der elektrischen Teile zeigt die FR-A-1 167 706. Dieser Motortyp ist jedoch nicht für Schutzarten von IP 23 und höher gleichermaßen gedacht und geeignet, weil die Abdeckung nicht derart demontierbar ist, daß der Motor in innenbelüfteter Ausführung genutzt werden kann.

Der Erfindung liegt nun die Aufgabe Zugrunde, im Interesse einer Standardisierung für Elektromotoren niedriger und auch höherer Schutzart gleichgestaltete Gehäuse und Mittel vorzusehen, die eine intensive Kühlung für höhere Schutzarten ermöglichen.

Zur Lösung dieser Aufgabe werden erfindungsgemäß Elektromotoren der eingangs genannten Gattung mit den kennzeichnenden Merkmalen des Anspruchs 1 vorgeschlagen.

Bevorzugt hat die Abdeckung die Form eines Topfes, Ringes oder einer Ringscheibe und kann Kühlrippen besitzen.

Das Ständerblechpaket kann ferner radial vergrößert sein und mehrere durchgehende Axialbohrungen enthalten.

Weiterhin kann der Motor ohne Gehäuse derart ausgeführt sein, daß topfförmige Lagerschilde am Ständerblechpaket direkt befestigt sind, wie es z.B. aus DE-OS 15 38 900 bekannt ist.

Wie z.B. aus CH 40 63 96 bekannt, können die topfförmigen Lagerschilde mit dem Ständerblechpaket mittels Schraubenbolzen, die durch einzelne der Axialbohrungen im Ständerblechpaket hindurchgesteckt sind, miteinander und mit dem Ständerblechpaket verspannt sein. Diese Teile können aber auch verschweißt werden.

Die radiale Vergrößerung des Ständerblechpakets, die an sich z.B. aus der DE-PS 873 718 bekannt war, ermöglicht die Unterbringung von axialen Kühlkanälen, die für alle Bauarten gute Kühlbedingungen auf der gesamten Länge des Motors schaffen. Durch Fortfall des eigentlichen Ständergehäuses und die Möglichkeit, die topfförmigen Lagerschilde für beide Maschinenseiten identisch auszubilden, ergibt eine gute Möglichkeit, die Vielfalt der Bauteile drastisch zu reduzieren.

Gemäß der Erfindung ist es möglich mit der o.g. Reduzierung der Bauteile Motoren der Schutzart IP 23 durch einfache zusätzliche lösbare Abdeckungen zum Schutz der elektrischen Teile, vor allem der Wickelköpfe des Ständers, für eine höhere Schutzart herzurichten. Diese Abdeckungen können die Form von Töpfen, Ringen oder Ringscheiben besitzen und sind in den Stirnräumen des Motors zwischen den Stirnseiten des Ständerblechpakets und den Lagerschilden eingesetzt. Die Berührungsflächen sind gemäß der jeweiligen Anforderungen bei aggressiver Atmosphäre Feuchtigkeit, Fremdkörper usw. abgedichtet. Das Gehäuse oder die Gehäuseteile können dann für alle Schutzarten gleich sein.

Die topfförmigen Lagerschilde können an beiden Seiten und zusätzlich oben mit Anbauflächen für den Klemmenkasten und das Leistungsschild versehen sein. Je nach Zugänglichkeit kann dann der Klemmenkasten und das Leistungsschild an einer beliebigen der drei Seiten angebracht werden.

Die unterschiedliche Länge des Ständerblechpakets bei den Elektromotoren unterschiedlicher Schutzart kann entweder durch einen zusätzlichen Gehäuse-Distanzring oder mehrere Löcher bzw. Langlöcher für die Befestigungsschrauben im Gehäusefuß kompensiert werden.

Die erfindungsgemäße Bauausführung eines Elektromotors bietet unabhängig von seiner Schutzart folgende Vorteile:
- die wesentlichen Inaktivteile können für Motoren unterschiedlicher Schutzart verwendet werden. Durch diese Standardisierung können Fertigungskosten sowie Lagerhaltungskosten in nicht unerheblichem Maße eingespart werden;
- die Kühlung aller Motoren gleich welcher Bauart wird beträchtlich intensiviert; woraus die Möglichkeit für eine Reduzierung der Lüfterleistung, aber auch eine Verringerung der Luftgeräusche resultiert;
- der Wärmeübergang vom Blechpaket an die Kühlluft erfolgt bei fehlendem Gehäuse direkt und nicht wie bisher auf dem Umweg über das Gehäuse;
- die durch magnetische Anregungen verursachten Geräusche werden durch die Verstärkung des Joches im Ständerblechpaket gemildert und können sich nicht radial auf frei schwingende Gehäuseteile (Gehäusemantel, Stege, Kühlrippen u.a.) fortpflanzen;
- durch das Fehlen des Gehäusemantels im Mittelabschnitt des Motors wird Gewicht eingespart, wenn die radiale Vergrößerung des Ständerblechpaketes über eine axiale Paketverkürzung aufgrund der intensiveren Kühlung kompensiert wird.

In der Zeichnung sind Ausführungsbeispiele des erfindungsgemäßen Elektromotors jeweils in teilweise geschnittener Seitenansicht dargestellt, anhand deren die Erfindung näher erläutert wird. Es zeigen
- Fig. 1: einen Elektromotor in der Ausführung als luftgekühlter Drehstrommotor, wie er z.B. für die Schutzart IP 23 gewählt wird,
- Fig. 2: den Längsschnitt eines herkömmlichen Normmotors etwa der Schutzart IP 44,
- Fig. 3: einen Elektromotor in der Ausführung als luftgekühlter Drehstrommotor, wie er z.B. für die Schutzart IP 23 gewählt wird, jedoch mit zusätzlicher kappenförmiger Abdeckung der Wickelköpfe für höhere Schutzart als IP 23;
- Fig. 4: die erfindungsgemäße Ausführung eines Motors für niedrige und höhere Schutzarten mit Sauglüftung und Topfabdeckung der Wickelköpfe;

Gleiche Teile sind in den verschiedenen Figuren mit denselben Bezugszeichen versehen.

Gemäß Figur 1 besteht der luftgekühlte Drehstrommotor, z.B. der Schutzart IP 23, aus dem Ständerblechpaket 1 den Spulen 2 im Stator mit den beidseitig über die Enden des Ständerblechpakets 1 hinausragenden Wickelköpfen 3 und dem konzentrisch im Stator angeordneten Rotor 4, der Lüfterflügel 5 zur Intensivierung der Kühlung der Wickelköpfe 3 an seinen axialen Enden besitzt.

Stator und Rotor sind vom Gehäuse 6 umgeben. An den gegenüberliegenden axialen Enden des Gehäuses 6 sind die Lagerschilde 7 angeflanscht, in denen Öffnungen 8, 9 zum Ein- und Austritt von Kühlluft in bzw. aus dem Inneren des Gehäuses 6 vorgesehen sind. Die Kühlluft wird durch einen an einem Ende des Gehäuses 6 auf die Welle 10 des Rotors 4 aufgesetzten Sauglüfter 29 durch das Innere des Gehäuses 6 gesaugt. Der Weg der Kühlluft durch das Innere des Gehäuses 6 ist durch Pfeile 13 markiert. Leitbleche 14 sorgen dafür, daß die Wickelköpfe 3 von Luft umströmt werden.

Am Motorengehäuse angeformt sind Füße 11 mit Löchern für den Durchtritt von Schrauben zur Befestigung des Motors auf dem Fundament und eine Öse 12 zum Einsetzen eines Kranhakens.

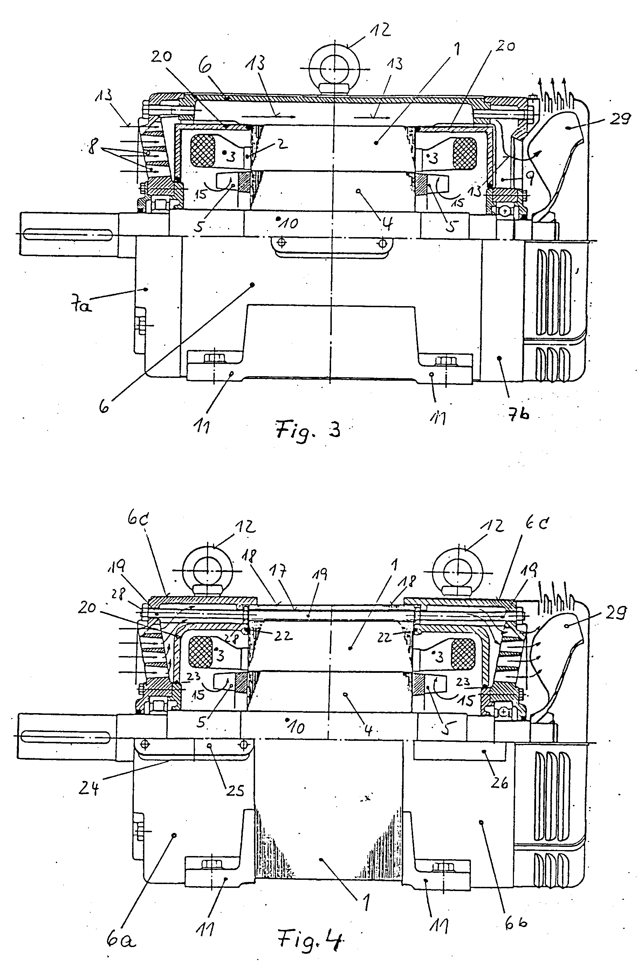

Für höhere Schutzart als IP 23 sind nach Fig. 3 die elektrischen Teile des Motors, insbesondere die Wickelköpfe 3, durch eine lösbare Abdeckung abgeschirmt. Die lösbare Abdeckung hat bei der Ausführung nach Fig. 3 die Form einer Kappe 20. In den beiden Stirnräumen des Motors erstreckt sich eine Kappe 20 zwischen dem Lagerschild 7 und dem Ständerblechpaket 1. Die Pfeile 15 kennzeichnen die Luftzirkulation innerhalb des nach außen durch die Kappen 20 abgeschlossenen Raums. Die durch den Sauglüfter 29 bewegte Kühlluft wird aus der Umgebung durch die Öffnungen 8 in den Motor gesaugt und strömt in axialer Richtung um die Kappe 20 durch den zwischen dem Ständerblechpaket 1 und Gehäuse 6 gebildeten Ringkanal in Pfeilrichtung 13.

Infolge der die elektrischen Teile abdeckenden Kappen 20 läßt sich der gleiche Motor auch für höhere Schutzarten als IP 23 betreiben.

Die Lagerschilde 7 sind als Gußteile (Lagerschildtöpfe) ausgeführt. Die Lagerschildtöpfe auf der Antriebsseite und auf der Lüfterseite sind im Interesse der höheren Teilestandardisierung gleich ausgeführt.

Bei der Ausführung gemäß Fig. 4 sind beide Wickelköpfe 3, die über die Stirnseiten des Ständerblechpakets 1 vorragen, für Elektromotoren höherer Schutzart als IP 23 wieder durch eine Kappe 20 abgedeckt. Die Kappe 20 erstreckt sich zwischen dem Lagerschild 7 und der gegenüberliegenden Stirnseite des Ständerblechpakets 1, wobei an beiden Berührungsflächen 22, 23 Dichtungen eingelegt sind.

An den Lagerschilden 7 sind Anbauflächen 24 an drei um 90 ° gegeneinander versetzten Seiten, zwei seitlich und eine oben, für den Anbau eines Kemmenkastens oder eines Leistungsschildes vorgesehen.

## Patentansprüche

1. Gekühlter Elektromotor mit einem Stator, einem Rotor (4) und mit Kühlöffnungen versehenen Lagerschilden (7) sowie einem Lüfter für Schutzarten IP 23 und höher,
**dadurch gekennzeichnet,** daß Motoren für höhere Schutzarten als IP 23 mit einer zusätzlichen lösbaren Abdeckung zum Schutz der elektrischen Teile, insbesondere der Wickelköpfe (3), in den Stirnräumen des Motors zwischen der Stirnseite des Ständerblechpaketes (1) und dem Lagerschild (7) versehen sind, welche die Räume mit den elektrischen Elementen von den durch strömendes Kühlmedium gekühlten Räumen zwischen einem Lagerschild und der Abdeckung dichtend trennt.

2. Elektromotor nach Anspruch 1,
**dadurch gekennzeichnet,** daß die Abdeckung die Form einer Kappe (20) oder einer Ringscheibe hat.

3. Elektromotor nach Anspruch 2,
**dadurch gekennzeichnet,** daß an der Abdeckung Kühlrippen angeformt sind.

4. Elektromotor nach Anspruch 1,
**dadurch gekennzeichnet,** daß das Ständerblechpaket (1) radial vergrößert ist und mehrere durchgehende Axialbohrungen (17) enthält.

5. Elektromotor nach einem der Ansprüche 1 bis 4,
**dadurch gekennzeichnet,** daß das Gehäuse aus zwei die Lagerschilde (7) bildenden Teilen besteht, die auf Umfangspaßflächen (18) an den axialen Enden des Ständerblechpaktes (1) aufgeschoben und mit diesem verbunden sind.

6. Elektromotor nach Anspruch 5,
**daduroh gekennzeichnet,** daß die Lagerschilde (7) mit dem Ständerblechpaket (1) mittels Schraubenbolzen (19), die durch einzelne der Axialbohrungen (17) im Ständerblechpaket (1) hindurchgesteckt sind, miteinander und mit dem Ständerblechpaket (1) verspannt sind.

7. Elektromotor nach Anspruch 5 oder 6,
**dadurch gekennzeichnet,** daß die Lagerschilde (7) identisch ausgebildet sind.

8. Elektromotor nach eine der Ansprüche 5 bis 7,
**dadurch gekennzeichnet,** daß an den Lagerschilden (7) Anbauflächen (24) für den Klemmenkasten und das Leistungsschild vorgesehen sind.

## Claims

1. A cooled electric motor having a stator, a rotor (4), end plates (7) formed with cooling apertures, and a fan, for protection types IP 23 and higher, characterized in that motors for higher protection types than IP 23 are equipped in the end spaces of the motor between the end face of the stator plate stack (1) and the end plate (7) with an additional releasable covering which protects the electrical parts, more particularly the winding overhangs (3), and which hermetically separates the spaces containing the electrical elements from those spaces between an end plate and the covering which are cooled by flowing coolant.

2. An electric motor according to claim 1, characterized in that the cover takes the form of a cap (20) or an annular disc.

3. An electric motor according to claim 2, characterized in that the cover is formed with cooling fins.

4. An electric motor according to claim 1, characterized in that the stator plate stack (1) is radially enlarged and formed with a number of continuous axial bores (17).

5. An electric motor according to one of claims 1 to 4, characterized in that the casing consists of two parts which form the end plates (7) and which are slipped on to peripheral fitting faces (18) at the axial ends of the stator plate stack (1) and are connected thereto.

6. An electric motor according to claim 5, characterized in that the end plates (7) are clamped to one another and to the stator plate stack (1) by means of screw bolts (19) inserted through individual axial bores (17) in the end plates (1).

7. An electric motor according to claims 5 or 6, characterized in that the end plates (7) are of identical construction.

8. An electric motor according to one of claims 5 to 7, characterized in that the end plates (7) have attachment surfaces (24) for the terminal box and the rating plate.

## Revendications

1. Moteur électrique refroidi avec un stator, un rotor (4) et des flasques munis d'ouvertures de refroidissement ainsi qu'un ventilateur pour des types de protection IP 23 et supérieur, caractérisé en ce que des moteurs avec des types de protection supérieurs à IP 23 sont munis d'un couvercle supplémentaire amovible pour la protection des pièces électriques, en particulier les têtes de bobine (3), dans les volumes frontaux du moteur entre la face frontale de l'empilage de tôles statoriques (1) et le flasque (7), qui sépare de manière étanche entre un flasque et le couvercle les volumes avec les éléments électriques par rapport aux volumes refroidis par un agent de refroidissement qui s'écoule.

2. Moteur électrique selon la revendication 1,
caractérisé en ce que le couvercle a la forme d'une coiffe (20) ou d'un disque annulaire.

3. Moteur électrique selon la revendication 2,
caractérisé en ce que des ailettes de refroidissement sont formées sur le couvercle.

4. Moteur électrique selon la revendication 1,
caractérisé en ce que l'empilage de tôles statoriques (1) est agrandi radialement et contient plusieurs alésages radiaux traversants (17).

5. Moteur électrique selon l'une des revendications 1 à 4,
caractérisé en ce que le carter est constitué de deux pièces formant les flasques (7), qui sont enfilées sur des surfaces d'ajustage périphériques (18) aux extrémités axiales de l'empilage de tôles statoriques (1) et lui sont reliées.

6. Moteur électrique selon la revendication 5,
caractérisé en ce que les flasques (7) sont croisillonnés avec l'empilage de tôles statoriques (1), au moyen de boulons filetés (19) qui sont enfoncés à travers l'empilage de tôles statoriques (1) dans des alésages axiaux (17) individuels, les uns avec les autres et avec l'empilage de tôles statoriques (1).

7. Moteur électrique selon la revendication 5 ou 6,
caractérisé en ce que les flasques (7) sont formés identiques.

8. Moteur électrique selon l'une des revendications 5 à 7,
caractérisé en ce que des surfaces de montage (24) pour la boîte de connexions et la plaque signalétique sont prévues sur les flasques (7).
